# EUROPÄISCHE PATENTSCHRIFT

(11) **EP 0 683 733 B1**
(45) Veröffentlichungstag und Bekanntmachung des Hinweises auf die Patenterteilung: **09.10.1996**
(21) Anmeldenummer: 94908353.9
(22) Anmeldetag: 19.02.1994
(51) Int. Cl.: B60B 21/04

(54) **FAHRZEUGRAD**
VEHICLE WHEEL
ROUE DE VEHICULE

(30) Priorität: 21.02.1993 DE 4305235; 28.07.1993 DE 4325292
(43) Veröffentlichungstag der Anmeldung: 29.11.1995
(73) Patentinhaber: STAHLSCHMIDT & MAIWORM GmbH, D-58791 Werdohl (DE); Janus, Jonny, D-40210 Düsseldorf (DE)
(72) Erfinder: JANUS, Jonny, D-40210 Düsseldorf (DE)
(74) Vertreter: Gille, Christian, Dipl.-Ing.
(86) Internationale Anmeldenummer: EP9400484
(87) Internationale Veröffentlichungsnummer: WO9419204

(56) Entgegenhaltungen:
- FR-A- 470 885
- GB-A- 2 039 831
- US-A- 4 308 907

## Beschreibung

Die Erfindung betrifft ein Fahrzeugrad gemäß dem Oberbegriff des Anspruchs 1.

Bei Fahrzeugrädern gilt derzeit der Luftreifen als das Konstruktions-Element, welches alle betriebsbedingten Kräfte vom Fahrzeug auf die Straße und umgekehrt zu übertragen hat. Dementsprechend konzentrieren sich die Bemühungen der Hersteller auf die Optimierung des Luftreifens, insbesondere im Hinblick auf die Gebrauchseigenschaften, nämlich das Handling, den Rollwiderstand, die Reibkraft-Übertragung zwischen Reifen und Fahrbahn, den Komfort und den Verschleiß, möglichst ohne schon erreichte Vorteile und Qualitäten einzubüßen.

Fahrzeugräder dieser Art sind heutzutage bei Fahrzeugen aller Art bekannt und üblich, insbesondere bei Kraftfahrzeugen und dazugehörigen Anhängern.

Die Entwicklung hat sich in letzter Zeit darauf konzentriert, Verbesserungen am Luftreifen zu finden, und insbesondere an der Gürteleinlage desselben. Hierdurch sind auch eindrucksvolle Verbesserungen am Luftreifen erzielt worden.

Diese Konzentration der Entwicklungsbemühungen auf den Gürtel- bzw. Laufstreifenbereich der heute bekannten und verwendeten Luftreifen lassen jedoch unberücksichtigt, daß auch die konstruktiv versteiften sogenannten Wulste, die sich radial oberhalb der Reifensitze etwa auf Höhe der Karkassumschläge in den Seitenwänden befinden, infolge der durch die Umfangsstörung in der Aufstandsfläche ausgelösten seitlichen Ausbeulung, aber auch im Bereich von sogenannten Rollwulsten bzw. stehenden Wellen und der durch tangentiale Verdrängungsarbeit eines dehn- und stauchsteifen Gürtels erzwungene Radius-Vergrößerung über den gesamten unbelasteten Umfang hochfrequent arbeiten, also durch Aufnahme von Antriebsenergie ganz erheblich zum Rollwiderstand des Reifens beitragen.

Dieses Problem ist durch Verbesserungen am Gürtel nicht zu beheben bzw. zu beeinflussen. Alle bisher erreichten Verbesserungen des Rollwiderstandes der Luftreifen sind praktisch nur durch Verbesserungen im Gürtel- bzw. Laufstreifenbereich erzielt worden.

Insbesondere wurde bisher zu wenig berücksichtigt, daß der Reifen nur ein Teil des Radsystems und die Felge, auf der der Reifen montiert wird, das andere Teil dieses Radsystem ist.

Trotz aller konstruktiven und material-spezifischen Bemühungen, die Wulste zu versteifen, deformieren sich die herkömmlichen Wulste unter dem betriebsbedingten Angriff mit bis zu 100 Biege-Lastwechseln in der Sekunde und entwickeln dabei - je nach Konstruktion und Betriebszustand - 30 bis 50 % des Gesamt-Rollwiderstandes des Luftreifens. Zusätzlich zu dieser spektakulären Deformationsarbeit aus der Radlast bzw. den Seitenkräften werden die versteiften Wulste permanent aus der Vorspur und dem Sturz des Rades während des Betriebs beansprucht.

Diese mehr unauffällige Arbeit der Wulste wird zwar von der Arbeit aus Radlast und Seitenkräften überlagert, kostet aber dennoch einen vermeidbaren spezifischen Anteil an Antriebsenergie.

Der Erfindung liegt die Erkenntnis zugrunde, daß zur Verbesserung der Gebrauchseigenschaften von Luftreifen, bei gleichzeitiger Bewahrung schon erreichter Tugenden, es nicht ausreicht, Verbesserungen nur im Gürtelbereich vorzunehmen, sondern hierzu auch über eine integrale Betrachtung des Radsystems die Seitenwandbereiche des Luftreifens mit den problematischen Wulsten und die Felge als Partner mit in die Lösung einzubeziehen sind. Gestützt wird diese Erkenntnis durch die Auswertung von zerstörenden Maschinenversuchen, wonach die Bereiche im Reifen, die einer betriebsbedingten Deformation großen Verformungswiderstand entgegensetzen, sehr viel wärmer werden als Bereiche, die sich leicht verformen lassen. So wurde gefunden, daß der Verformungswiderstand in direkter Relation zur Energie-Aufnahme bzw. zum Rollwiderstand steht und daß es vorteilhaft sein muß, die Bereiche des Reifens, die permanent unvermeidlichen Deformationen ausgesetzt sind, besonders leicht verformbar zu machen.

Der Erfindung liegt dementsprechend die Aufgabe zugrunde, ein luftbereiftes Fahrzeugrad zu schaffen, bei dem die Felge nicht nur als Halterung für den Luftreifen dient, sondern bei dem im Interesse eines möglichst großen Luftvolumens gegebenen Höhen-Breitenverhältnisses auch exakt definierte Stützfunktionen für den montierten Reifen übernimmt, die dieser bisher nur eingeschränkt und um den Preis eines hohen Energie-Verlustes erfüllen konnte, und bei dem der auf die Felge abgestimmte Luftreifen, Seitenwände aufweist, die zwischen den Reifensitzen und den Reifenschultern so biegeweich wie möglich ausgeführt sind.

Diese Aufgabe wird erfindungsgemäß mit einem Fahrzeugrad gelöst, das die Merkmale des Anspruches 1 aufweist. Vorteilhafte Ausgestaltungen der Erfindung sind Gegenstand der Unteransprüche.

Durch die Erfindung, bei der das Radsyste m als Ganzes betrachtet wird, ist es möglich, Reserven zu erschlieBen, welche Verbesserungen der Gebrauchseigenschaften ermöglichen, die bisher nicht erzielbar waren, da der Luftreifen und die Felge als Konstruktions-Element jeweils getrennt betrachtet wurden. So schließt die vorliegende Erfindung sowohl die Ausbildung der Reifen-Seitenwände insbesondere im Bereich der herkömmlichen sogenannten Wulste oberhalb der Reifensitze an der Übergangszone zur Felge als auch die Ausbildung der Felge zur Übernahme der erfindungsgemäßen Verteilung der Aufgaben innerhalb des Radsystems zwischen Reifen und Felge ein.

Beim erfindungsgemäßen luftbereiften Fahrzeugrad fallen dem Reifen vorrangig alle Funktionen zu, die für eine gewünschte elastische radiale Deformation notwendig sind, während die Felge alle Funktionen zu erfüllen hat, bei denen formstabiles laterales Verhalten von Vorteil ist.

Die erfindungsgemäßen biegeweichen Seitenwände des Reifens werden zwar von der Radlast, den Seitenkräften und den Grundlasten aus Vorspur und Sturz ebenfalls deformiert, aber sie nehmen dabei nur einen Bruchteil der Antriebsenergie auf, die die herkömmlichen steifen Wulste über innere Reibung in kritische Abfallwärme bis 130° C umwandeln.

Beim erfindungsgemäßen luftbereiften Fahrzeugrad soll der Reifen infolge eines möglichst großen Luftvolumen vorrangig radial weich einfedern, wobei seine Seitenwände so biegeweich wie nur möglich ausgelegt sind, damit bei Deformationen so wenig Antriebsenergie wie möglich aufgenommen und der Reifenkomfort verbessert wird. Hierzu können in den Seitenwänden tangential verlaufende Biege-Rillen angeordnet sein, die örtlich zu einer weiteren Reduzierung des Verformungswiderstandes beitragen.

Gleichzeitig können diese Seitenwände in den Bereichen jeweils zwischen den vorerwähnten Biege-Rillen als seitlich herausragende Rippen ausgeformt sein, um einen örtlich wirkenden verbesserten Schutz für die biegeweichen Seitenwände gegen eventuelle Beschädigungen aus Bordsteinberührungen zu bieten.

Die Felge übernimmt dagegen durch die radiale Verlängerung nach außen des zumindest inneren Felgenhornes bis etwa auf Höhe des durch Kernreiter/Kerngummi u.ä. Maßnahmen versteiften und nun entfallenden Wulstes die seitliche Abstützung der biegeweichen inneren Reifen-Seitenwand gegen von außen nach innen angreifende Kräfte aller Art.

Die Bezeichnung "innen" bezieht sich bei der Beschreibung der Felge und des Reifen-Querschnittes bzw. der Seitenwände jeweils auf die zur Fahrzeug-Mitte weisenden Seite.

Wegen der ungleich höheren Formstabilität des Felgen-Werkstoffes, gegen den sich die jeweils innere Reifen-Seitenwand abstützt, kann die seitliche Verzerrung beider Seitenwände der kurvenäuBeren Reifen besonders vorteilhaft reduziert werden, so daß sich neue Freiräume für den Konstrukteur, beispielsweise bei der Auslegung des Gürtels oder der Bemessung des Luftvolumens eröffnen. Der aufgrund der höheren lateralen Formstabilität des inneren Felgenhornes der kurvenäußeren Räder erreichten höheren Seitenstabilität des Radsystems kommt insofern noch eine besondere Bedeutung zu, als die kurvenäußeren Räder infolge der fliehkraftbedingten Wank-Bewegungen des Fahrzeuges so wesentlich stärker belastet werden können, daß im Extremfall die kurveninneren Räder völlig abheben können und damit die Führungsarbeit allein von den kurvenäußeren Rädern des Fahrzeuges geleistet wird, ohne daß es zu einem Abbau der Seitenstabilität kommt.

Ein vergleichbares Ergebnis ist bei Verwendung von herkömmlichen versteiften Wulsten zur Übertragung von Seitenkräften nicht erzielbar, da die bekannten Wulste aus Gummi nicht annähernd so steif sein können, dabei als einseitig gelagerte Biegeträger wirken und bei lateraler Beanspruchung sowohl ausbiegen als auch um die zugfesten Kernringe des Reifensitzes wanken oder drehen. Es finden hier also im Vergleich ausgeprägte Relativ-Bewegungen der herkömmlichen Wulste zu den normalen Felgenhörnern statt, so daß die unter Einwirkung der Seitenkräfte entstehende seitliche Verzerrung einschließlich der Membranen oberhalb der Wulste insgesamt größer ist als bei dem erfindungsgemäßen Radsystem.

Beim erfindungsgemäßen Fahrzeugrad ist die innere Seitenwand des Reifens so von dem höheren inneren Horn der starren Felge abgestützt, daß z.B. eine seitliche Verzerrung des Reifen-Querschnittes auf der kurvenäußeren Seite des Fahrzeuges durch Auslenkung oder Ausbeulung bei Seitenkraft nach innen insgesamt kleiner ausfällt als bei einem herkömmlichen Reifen vergleichbarer Bauhöhe und Luftvolumen mit Wulsten auf einer herkömmlichen Felge.

Daher können Lenkimpulse viel präziser und auf kürzerem Wege von der Felge an den Zenit des Luftreifens weitergegeben werden.

Bei dem erfindungsgemäßen Fahrzeugrad verringert sich beim Luftreifen der Rollwiderstand in etwa um die bisherige Biegearbeit der nun entfallenden Wulste, während sich gleichzeitig eine Erhöhung der Richtungsstabilität ergibt. Bei Kurvenfahrt ist das Ansprechverhalten verbessert, und der Schräglaufwinkel reduziert sich.

In vergleichenen Versuchen wurde gefunden, daß Reifen mit den erfindungsgemäßen biegeweichen Seitenwänden bei identischen Luftvolumen und Innendruck um 2 mm stärker einfedern und trotz der hierdurch größeren Arbeit des Stahlkord-Gürtels bis 100 Km/h eine deutliche Reduzierung des Gesamtrollwiderstandes aufweisen, als dimensionsgleiche herkömmliche Reifen. Wird dagegen das Maß der Einfederung durch Erhöhung des Innendruckes auf das Niveau des herkömmlichen Reifens mit den bekannten Wulstverstärkungen aus hartem Kerngummi bzw. Kernreiter angeglichen, so reduziert sich der Rollwiderstand drastisch, jedoch ohne Einbuße an Komfort, da die radiale Feder-Kernlinie der erfindungsgemäßen biegeweichen Reifen-Seitenwände charakteristisch weicher ist als die bei gleichem Höhen-Breitenverhältnis steiferen Seitenwände des herkömmlichen Reifens.

Weiteres Entwicklungsspiel für das erfindungsgemäße Radsystem bietet sich durch die Wechselwirkung der biegeweichen Seitenwände mit einem definierten dehn- und stauchbaren Reifengürtel an, da hierdurch die störenden tangentialen Verzerrungen der Seitenwände in Folge der Verdrängungsbewegungen des herkömmlichen stauchsteifen Gürtels vermieden werden können. In diesem Zusammenhang wirkt sich generell auch die biegeweiche Auslegung der Seitenwände durch die Entkopplung der Gürtelarbeit von der Beanspruchung der Seitenwände am Übergang zu den Felgenhörnern positiv aus.

Für die Ausführung der Felge mit beidseitig radial erhöhten Hörnern kann die Felge auch zweigeteilt sein, damit der Luftreifen montiert werden kann.

Durch eine eingezogene Kontur der erhöhten Felgenhörner, die in ihrem steileren Verlauf die natürliche Biegekontur der weichen Seitenwände zur Felgen-Mitte einschnürt, läßt sich die jeweilig betroffene Reifen-Seitenwand durch den Luft-Innendruck so vorspannen, daß sie beim Aufbau einer Seitenkraft sofort anspricht und sich nicht erst bis zu einem Anschlag deformieren muß. Dies fördert auf eine weitere erfindungsgemäße Weise die Präzision und das Ansprechverhalten des Luftreifens.

Durch die erfindungsgemäße Vorspannung der vorzugsweise inneren Seitenwand wird am inneren höheren Felgenhorn ein so form- und kraftschlüssiger Kontakt erzeugt, daß ein Scheuern nicht möglich ist.

Die Seitenwände des Luftreifens können beim erfindungsgemäßen Fahrzeugrad ohne Auswirkung auf die Seitenstabilität weicher und elastischer ausgebildet sein, weil das erhöhte innere Horn der Felge die Aufgabe der Seitenabstützung übernimmt.

Ist die Felge einteilig ausgebildet, so hat das äußere Felgenhorn eine normale, also geringere, radiale Erstreckung, um den Luftreifen montieren und demontieren zu können, während das innere Felgenhorn verlängert ausgebildet ist und für die Seitenabstützung des Luftreifens bzw. seiner inneren Seitenwand gegen von außen angreifende Kräfte sorgt.

Die am äußeren Felgenhorn gelagerte äußere biegeweiche Reifen-Seitenwand kann ungehindert ihren Komfort-Aufgaben durch energiearmes Ausbeulen bzw. Einfedern nachkommen, ohne daß die Seitenstabilität hiervon betroffen ist.

Die Seitenwände des Luftreifens sind nun nicht mehr durch Kernreiter/Kerngummi o.ä. Maßnahmen konstruktiv versteift, sondern in ihrer gesamten Höhe zwischen den Reifensitzen und den Reifenschultern als biegeweiche Membranen ausgebildet, so daß sie bei seitlicher Ausbeulung nur noch geringere innere Arbeit leisten müssen und dadurch auch die in den Wulsten entstehenden schädlichen hohen Arbeitstemperaturen vermieden werden, die bei hohen Lauf-Geschwindigkeiten auch zu einer Gefahr für die Betriebsfestigkeit werden können.

Bei einem bekannten Fahrzeugrad mit drehbar zu lagernden Felge und einem lösbar auf dieser Felge anzuordnenden Luftreifen ist es bekannt (US-A-4 308 907), an den Außenkanten der Felge radial hochstehende, sogenannte Hörner anzuordnen, welche die Flanken des Luftreifens bis etwa in den mittleren Bereich derselben nach außen abstützen. Diese Felgen-Hörner sind entsprechend der natürlich Kontur der Luftreifen in ihrer Gestalt und Anordnung angepaBt, um ein Ausbeulen der Luftreifen unter Last zu verhindern.

In der Zeichnung ist ein Ausführungsbeispiel eines erfindungsgemäßen Fahrzeugrades schematisch dargestellt, und zwar zeigt
- Fig. 1: einen Querschnitt der Felge und des auf dieser montierten Luftreifens,
- Fig. 2: einen Teilschnitt der Felge aus Fig. 1 im Bereich des an der Innenseite befindlichen erhöhten Felgenhornes und
- Fig. 3: einen Teilschnitt des erfindungsgemäßen Luftreifens, aus dem weitere Einzelheiten des Luftreifens zu erkennen sind.

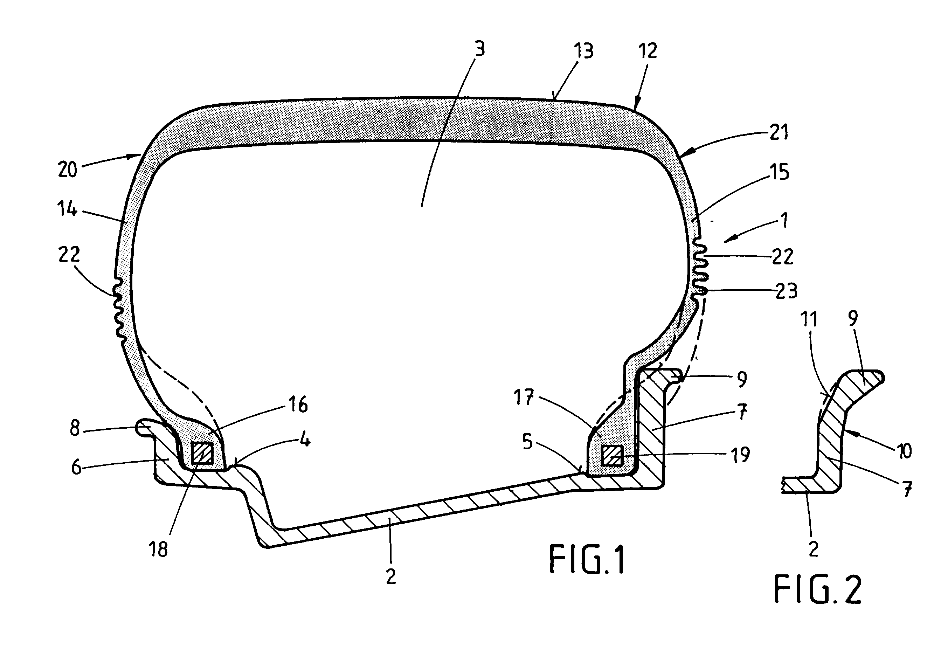

Das in Fig. 1 dargestellte Fahrzeugrad 1 besteht aus einer aus Metall hergestellten radförmigen Felge 2 und einem auf dieser montierten Luftreifen 3, der im wesentlichen aus biegsamen Material wie vulkanisiertem Kautschuk bzw. Gummi hergestellt ist.

Die Felge hat nahe ihren beiden äußeren Enden je eine Auflagefläche 4 und 5 für unten beschriebene Sitze des montierten Luftreifens. Ferner hat die beim beschriebenen und dargestellten Ausführungsbeispiel einstückige Felge 2 an den Außenkanten je ein hochstehendes Felgenhorn 6 bzw. 7, um den montierten Luftreifen 3 auf der Felge 2 zu halten.

Beim dargestellten Ausführungsbeispiel ist das an der Außenseite der Felge befindliche Felgenhorn 6 in radialer Erstreckung kürzer als das an der Innenseite der Felge 2 befindliche Felgenhorn 7 ausgebildet. Jedes der beiden Felgenhörner 6 und 7 hat eine nach außen vorstehende Nase 8 bzw. 9, die einen gebogenen oder allmählichen Übergang vom radialen Abschnitt des Felgenhornes nach außen gewährleistet, um einen scharfkantigen Kontakt zwischen Felge 2 und Luftreifen 3 zu vermeiden.

Bei der in Fig. 2 gezeigten Variante des an der Innenseite befindlichen Felgenhornes 7 ist zwischen der nach außen weisenden Nase 9 und dem radial verlaufenden Abschnitt 10 des Felgenhornes 7 ein bogenförmig oder schrägverlaufender Abschnitt 11 vorgesehen, der einen allmählichen Übergang zwischen dem radial verlaufenden Abschnitt 10 und der nach außen weisenden Nase 9 bildet, um eine zu starke Einschnürung des Luftreifens 3 im Bereich der Felge zu vermeiden.

Der gemäß Fig. 1 auf der Felge 2 montierte Luftreifen 3 hat einen im Querschnitt torusförmigen Körper 12, der eine etwa zylindrische Lauffläche 13 und zwei etwa radial verlaufende Seitenwände 14 und 15 aufweist, welche über ihre gesamte Länge bzw. radiale Erstreckung als biegeweiche Membran ausgebildet sind.

Am inneren Ende jeder dieser Seitenwände 14 und 15 ist jeweils ein ringförmiger verdickter Reifensitz 16 bzw. 17 angeformt, wobei in jedem der ringförmigen Reifensitze ein zugfester Kernring 18 bzw. 19 angeordnet ist.

Die Reifensitze 16 und 17 sind wegen der in diesen angeordneten Kernringen 18 bzw. 19 verdickt ausgebildet, jedoch sind die Seitenwände 14 und 15 des Luftreifens 3 über deren gesamte Länge zwischen dem entsprechenden Reifensitz 16 bzw. 17 und der am Übergang zur Lauffläche 13 befindlichen Reifenschulter 20 bzw. 21 biegeweich nach Art einer Membran ausgebildet.

Wie Fig. 1 zeigt, erstreckt sich das längere ausgebildete Felgenhorn 7 bis in den Bereich der entsprechenden membranartigen Seitenwand 15, während das kürzere Felgenhorn 6 dicht oberhalb des ringförmigen Reifensitzes 16 endet, damit bei einteiliger Felge 2 der Luftreifen 3 montiert und demontiert werden kann. Das an der Innenseite der Felge angeordnete, radial längere ausgebildete Felgenhorn 7 dient hingegen dazu, die als biegeweiche Membran ausgebildete Seitenwand 15 abzustützen, wenn nach innen gerichtete Seitenkräfte auftreten. Daher ist es beim erfindungsgemäßen Fahrzeugrad nicht erforderlich, im Luftreifen 3 selbst Verstärkungselemente wie steife Kernreiter anzuordnen, um seitlich einwirkende Kräfte, beispielsweise bei Kurvenfahrten, aufzufangen.

Obwohl die membranartig ausgebildeten Seitenwände 14 und 15 des Luftreifens 3 bereits äußerst biegsam sind, weil sie keine wesentliche Versteifungselemente enthalten, können zur weiteren Verbesserung der Biegsamkeit oder Auslenkbarkeit der Seitenwände diese mit umlaufenden Rillen 22 versehen sein, deren Tiefe variabel ist. Beim Ausführungsbeispiel gemäß Fig. 1 sind derartige Rillen 22 in der dort links dargestellten Seitenwand 14 vorgesehen.

Um Beschädigungen der Seitenwand des Luftreifens im Bereich der Rillen 22 zu vermeiden, beispielsweise beim Fahren mit dem Reifen gegen Bordsteine, können zwischen den Rillen 22, wie in Fig. 1 anhand der Seitenwand 15 gezeigt, zwischen den Rillen 22 über das Grundprofil der Seitenwand 15 vorstehende Stege oder Rippen 23 angeformt sein.

Die Rillen 22 und die Stege 23 sind jedoch nur wahlweise vorzusehen, wobei ein Luftreifen 3, wenn er Stege 23 nur einseitig aufweist, zweckmäßig so montiert, daß diese Stege 23 an der Außenseite liegen, weil dort Beschädigungen der Rillen 22 eher zu erwarten sind als an der Innenseite.

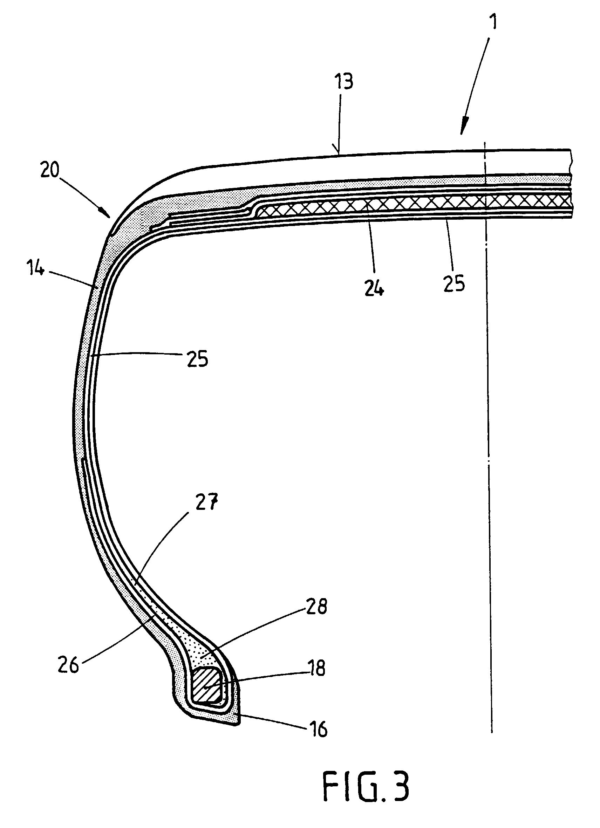

Fig. 3 zeigt, daß der Luftreifen 3 im Bereich seiner Lauffläche 13 einen Gürtel 24 und insgesamt eine Karkass-Einlage 25 enthält, die sich von Seitenwand zu Seitenwand bis in die Reifensitze 16 und 17 erstreckt und um die dort befindlichen Kernringe 18 und 19 umgelegt ist, so daß im Bereich jeder der Seitenwände 14 und 15 je ein Umschlag 26 der Karkass-Einlage 25 vorgesehen ist, der sich mehr oder weniger weit innerhalb der betreffenden Seitenwand erstreckt, um eine gute Verankerung der aus Reifenkord bestehenden Karkass-Einlage 25 an den betreffenden Kernringen 18 und 19 zu gewährleisten.

Obwohl in Fig. 3 der Umschlag 26 oberhalb des betreffenden Kernringes 18 im Abstand von der Seele 27 der Karkass-Einlage verläuft, ist der dadurch entstehende Zwischenraum 28 nicht mit steifem Material ausgefüllt, um eine Seitenstabilität des Luftreifens 1 zu erzielen, sondern mit weichem Material wie weichem Gummi. Beim erfindungsgemäßen Luftreifen 3 wird deshalb die Seitenstabilität, wie oben näher beschrieben, im wesentlichen durch die Form der Felge 2 bestimmt.

Bei der vorstehenden Zeichnungsbeschreibung ist die Felge des Fahrzeugrades in Verbindung mit einem speziellen Luftreifen erläutert, dessen Seitenwände im gesamten Bereich zwischen den Reifensitzen und Reifenschultern biegeweich ausgebildet ist und sich somit von herkömmlichen Reifen unterscheidet. Obwohl es sich hierbei um eine bevorzugte Ausführungsform handelt, kann das Fahrzeugrad aber auch mit Luftreifen herkömmlicher Konstruktion verwendet werden, das heißt mit Luftreifen, deren Seitenwände nicht speziell biegeweich ausgebildet sind.

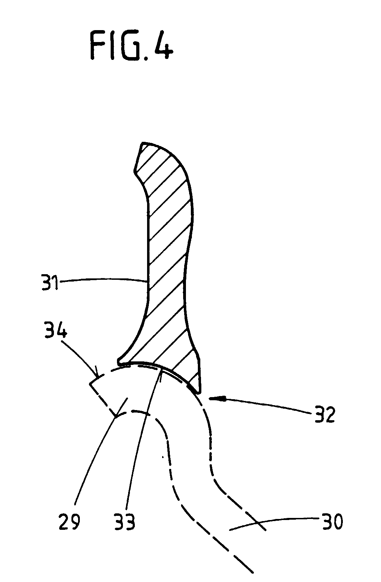

In Fig. 4 ist das an der Innenseite des nicht näher dargestellten Fahrzeugrades befindliche, nach außen abgebogene Horn 29 einer herkömmlichen Felge 30 dargestellt, das als Sitz für den nicht näher dargestellten Wulstring eines ebenfalls nicht dargestellten Luftreifens beliebiger Konstruktion dient. Auf das Horn 29 der Felge 30 ist ein aus Metall bestehender Ring 31 aufgeschrumpft, der die Funktion des oben beschriebenen erhöhten Felgenhorns 7 erfüllt und die Möglichkeit verschafft, bereits vorhandene Felgen 30 mit einem derartigen erhöhten Felgenhorn auszustatten.

Bei dieser Ausführungsform verfügt der aus einem festen Material sehr leicht und gleichförmig hergestellte Felgen-Ring 31 in seinem konzentrischen Verlauf über einen verschließbaren Stoß 32, so daß er vor oder auch nach der Montage des Luftreifens auf das Felgen-Horn 29 aufgesetzt werden kann.

Eine weitere Ausführungsform sieht die Verwendung eines in sich geschlossenen Felgen-Ringes vor, der in seinem Umfang maßlich so ausgelegt ist, daß der zum Zwecke seiner Montage erwärmte Felgen-Ring 31 nach dem Aufschieben auf das kühlere Felgen-Horn 29 beim Abkühlen so auf dieses aufschrumpft, daß sich eine dauerhafte spielfreie Verbindung ergibt. Dabei ist die radial innere Kontur 33 des Felgen-Ringes 31 so ausgebildet, daß sie mit der radial äußeren Kontur 34 des Felgen-Hornes 29 übereinstimmt, um ein formschlüssiges Ineinandergreifen der Kontaktflächen von Felgen-Horn 29 und Felgen-Ring 31 zu gewährleisten. In Verbindung mit der zugfesten Struktur des Felgen-Ringes 31 wird somit eine kraftschlüssige, formstabile und feste Abstützung der Seitenwand des nicht dargestellten Reifens erreicht, so daß Deformationen, die zur Störung der Boden-Ausstandsflächen des Reifens führen, verhindert werden.

## Patentansprüche

1. Fahrzeugrad, mit einer drehbar zu lagernden Felge (2) und einem lösbar auf dieser anzuordnenden Luftreifen (3), der einen im Querschnitt torusförmigen Körper mit einer etwa zylindrischen Lauffläche (13) sowie zwei radial verlaufenden Seitenwänden (14,15) und mit an den zur Felge weisenden Enden befindlichen, durch zugfeste Kernringe (18,19) verstärkten Reifensitzen (16,17) zum Befestigen des Luftreifens zwischen endständigen Hörnern (6,7; 29,31) der Felge (2), **dadurch gekennzeichnet,** daß eines der beiden Felgen-Hörner (7) eine größere radiale Länge als das andere Felgen-Horn (6) aufweist und sich wenigstens bis etwa in den mittleren Bereich der betreffenden Seitenwand (15) des Luftreifens (3) erstreckt und daß das jeweils höhere Felgen-Horn (7) in seiner radialen Erstreckung steiler, also eingezogener, verläuft als die natürliche Biegekontur der unter Innendruck stehenden Seitenwände (14,15) des Luftreifens (3).

2. Fahrzeugrad nach Anspruch 1, dadurch gekennzeichnet, daß die Seitenwände (14,15) des Luftreifens (3) im gesamten Bereich zwischen den Reifensitzen (16,17) und den Reifenschultern (20,21) biegeweich ausgebildet sind.

3. Fahrzeugrad nach Anspruch 1, dadurch gekennzeichnet, daß die Seitenwände (14,15) des Luftreifens (3) als einzige Verstärkung im Gummimaterial eine vorzugsweise aus Reifenkord bestehende Karkass-Einlage (25) enthalten.

4. Fahrzeugrad nach Anspruch 2, dadurch gekennzeichnet, daß die Karkass-Einlage (25) im Bereich der Reifensitze (16,17) einen Umschlag (26) aufweist, der sich entweder direkt um den betreffenden Kernring (18 bzw. 19) legt und dort endet oder bis in die betreffende Seitenwand (14 bzw. 15) ohne Zwischenlage von versteifenden Elementen zurückgeführt ist.

5. Fahrzeugrad nach einem der Ansprüche 1 bis 3, dadurch gekennzeichnet, daß die Seitenwände (14, 15) des Luftreifens (3) umlaufende vertiefte Rillen (22) enthalten.

6. Fahrzeugrad nach Anspruch 4, dadurch gekennzeichnet, daß zwischen den Rillen (22) nach außen vorsehende umlaufende Stege (23) vorgesehen sind.

7. Fahrzeugrad nach einem der Ansprüche 1 bis 6, dadurch gekennzeichent, daß zum Erzeugen der größeren radialen Länge des einen Felgenhornes (29) auf dasselbe ein umlaufender scheibenartiger Ring (31) aufgeschrumpft oder aufgespannt ist.

## Claims

1. Vehicle wheel with a rim (2) mounted for rotation and a pneumatic tyre (3) mounted detachably on it and having a body of torus shape in cross-section with a substantially cylindrical tread (13) as well as two radially extending side walls (14, 15) and with tyre seatings (16, 17) reinforced by inextensible core rings (18, 19) at the ends nearest the rim for securing the tyre between upstanding horns (6, 7; 29, 31) of the rim (2), **characterised in that** one of the two horns (7) of the rim has a greater radial length than the other horn (6) and extends at least as far as approximately into the central region of the associated side wall (15) of the tyre (3) and that the respective higher horn (7) of the rim extends in its radial extent more steeply, that is to say more drawn-in, than the natural bending profile of the side walls (14, 15) of the tyre (3) under internal pressure.

2. Vehicle wheel according to claim 1, characterised in that the side walls (14, 15) of the tyre (3) are made flexible in bending in the entire region between the seatings (16, 17) and the shoulders (20, 21) of the tyre.

3. Vehicle wheel according to claim 1, characterised in that the side walls (14, 15) of the tyre (3) contain as the single reinforcement in the rubber material a carcass insert (25) preferably comprising tyre cord.

4. Vehicle wheel according to claim 2, characterised in that the carcass insert (25) has a loop (26) in the region of the seatings (16, 17), this loop either lying directly around the associated core ring (18 or 19) and terminating there or being conducted back into the associated side wall (14 or 15) without the interposition of stiffening elements.

5. Vehicle wheel according to one of claims 1 to 3, characterised in that the side walls (14, 15) of the tyre (3) contain circumferential deepened grooves (22).

6. Vehicle wheel according to claim 4, characterised in that outwardly projecting circumferential ribs 23 are provided between the grooves (22).

7. Vehicle wheel according to one of claims 1 to 6, characterised in that for achieving the greater radial length of the one horn (29) of the rim a circumferentially extending disc-like ring (31) is shrunk or clamped onto the latter.

## Revendications

1. Roue de véhicule comprenant une jante (2) à monter de façon tournante, ainsi qu'un pneumatique (3) à disposer de façon séparable sur celle-ci et comportant un corps de section de forme torique, qui est pourvu d'une bande de roulement (13) à peu près cylindrique et de deux flancs (14, 15) orientés radialement, et qui comporte des appuis de pneumatique (16, 17) situés aux extrémités dirigées vers la jante et renforcés par des tringles (18, 19) résistant à la traction, en vue d'une fixation du pneumatique entre des rebords extrêmes (6, 7; 29, 31) de la jante (2), roue caractérisée en ce qu'un des deux rebords (7) de la jante a une plus grande longueur radiale que l'autre rebord (6) et s'étend au moins approximativement jusque dans la zone centrale du flanc correspondant (15) du pneumatique (3) et en ce que le rebord respectivement plus haut (7) de la jante est réalisé sur son étendue radiale avec une pente plus forte, c'est-à-dire un retrait plus fort que le contour de flexion naturel des flancs (14, 15), soumis à une pression interne, du pneumatique (3).

2. Roue de véhicule selon la revendication 1, caractérisée en ce que les flancs (14, 15) du pneumatique (3) sont pourvus d'une souplesse à la flexion dans toute la zone située entre les appuis (16, 17) et les épaulements (20, 21) du pneumatique.

3. Roue de véhicule selon la revendication 1, caractérisée en ce que les flancs (14, 15) du pneumatique (3) comportent, comme unique renforcement dans le matériau caoutchouté, une nappe de carcasse (25) constituée de préférence de câblés.

4. Roue de véhicule selon la revendication 2, caractérisée en ce que la nappe de carcasse (25) comporte dans la zone des appuis de pneumatique (16, 17) un renvoi (26) qui est enroulé directement autour de la tringle correspondante (18, 19) et qui se termine dans cette zone, ou bien qui est ramené dans le flanc correspondant (14, 15) sans interposition d'éléments de renforcement.

5. Roue de véhicule selon l'une des revendications 1 à 3, caractérisée en ce que les flancs (14, 15) du pneumatique (3) comportent de profondes rainures circonférencielles (22).

6. Roue de véhicule selon la revendication 4, caractérisée en ce qu'il est prévu entre les rainures (22) des nervures circonférencielles (23) dirigées vers l'extérieur.

7. Roue de véhicule selon l'une des revendications 1 à 6, caractérisée en ce que, pour donner la plus grande longueur radiale à un des rebords (29) de la jante, un anneau périphérique en forme de disque (31) est fixé sur ledit rebord par frettage ou par serrage.
